# EUROPEAN PATENT SPECIFICATION

(11) **EP 2 795 469 B1**
(45) Date of publication and mention of the grant of the patent: **05.08.2020**
(21) Application number: 11877673.1
(22) Date of filing: 20.12.2011
(51) Int. Cl.: H04W 4/029, H04L 12/24, G06F 9/54, G06Q 10/10, H04L 29/06

(54) **METHODS, NODES, AND COMPUTER PROGRAMS FOR ACTIVATING REMOTE ACCESS**
VERFAHREN, KNOTEN, UND COMPUTERPROGRAMME ZUR AKTIVIERUNG VON FERNZUGRIFF
PROCÉDÉS, NOEUDS, ET PROGRAMMES INFORMATIQUES DESTINÉS À ACTIVER UN ACCÈS À DISTANCE

(43) Date of publication of application: 29.10.2014
(73) Proprietor: Telefonaktiebolaget LM Ericsson (publ), 164 83 Stockholm (SE)
(72) Inventor: NYBERG, Marcus, 12 637 Hägersten (SE); HÄGGLUND, Caroline, 112 53 Stockholm (SE); NORLIN, Cristian, 11 648 Stockholm (SE); GOMEZ, Peter, 11 361 Stockholm (SE)
(74) Representative: Brann AB
(86) International application number: PCT/SE2011/051542
(87) International publication number: WO 2013/095218

(56) References cited:
- WO-A1-2011/001538
- WO-A1-2012/145466
- US-A1- 2002 065 875
- US-A1- 2004 213 384
- US-A1- 2007 168 458
- US-A1- 2009 109 277
- US-A1- 2009 232 288
- US-A1- 2010 033 342
- US-A1- 2011 044 438
- US-A1- 2011 170 787
- US-B1- 7 340 747
- LISCANO R. ET AL.: 'Discovering and Managing Access to Private Services in Collaborative Sessions.' IEEE TRANSACTIONS ON SYSTEMS, MAN AND CYBERNET. vol. 36, no. 6, 01 November 2006, pages 1086 - 1097, XP011149605

## Description

### Technical field

The technology disclosed herein relates generally to the field of communication systems, and in particular to activating of remote access within such communication systems.

### Background

Operators of communication systems invest considerable amount of time, money and effort in providing and developing various value-added services in a continuous strive and desire to increase the user experience of their customers. Telepresence, also known as virtual presence, was introduced some years ago in the form of video communication and has evolved since then, for example by the introduction of various types of shared material and advanced handling thereof.

The shared material often comprises a digital object, e.g. a file, residing in a technical system, e.g. a server. The shared material is accessible by the participants of a video communication session in accordance with the capabilities of the technical system. The collaboration of the shared material between the participants is thus typically defined by the technical nature of the system that is used for the sharing. This often limits the ease of use e.g. in that the participants have to remember procedures and actions for navigating in menus and file-sharing systems.

The use of mid-air gestures is another value-added feature that has emerged. Such mid-air gesture may e.g. comprise turning over pages of an electronic book by a gesture without touching the screen on which the book is being read, and also finds applications within video communication.

Within the field of wireless communication, a related example comprises filming an object with a mobile phone camera and receiving, from the wireless communication system, information about this particular object. In order to implement such feature e.g. physical object recognition and mobile media extraction may be utilized. A concrete example comprises a mobile phone user that is filming an object using the mobile phone camera, and receives information about the object as an augmented reality layer on top of the camera feed.

The ease of use is an important aspect in video communication and in the collaboration between the participants thereof, e.g. in that the participants should easily grasp how to use it and be able to conveniently include shared material.

With the ever increasing technological development and the interconnectability of various devices, a need can be predicted for solutions that offer easy access to services, applications, systems, Internet-enabled objects and yet further types of features.

US Publication No. 2011/044438 A1 relates to providing shareable applications executable on telecommunications devices that facilitate sharing of information and processes during voice communications. PCT publication WO 2012/145466 A1 relates to network based computerized collaboration initiated and keyed from voice calls. US Publication No. 2009/232288 A1 relates to an interactive information distribution system facilitating automatic transmission of a variety of information packets to communication devices of a calling party and a called party.

### Summary

An object of the invention is to address the above described need.

The invention is defined by a first independent claim referring to a method (claim 1), by a second independent claim (claim 7) referring to a device executing the method of claim 1 and by a third independent claim (claim 9) referring to a computer program.

The object is according to a first aspect achieved by a method for activating remote access, the method performed in a collaboration node of a communication system. The communication system comprises a first node and a second node having an established communication link between them. The method comprises: receiving, from the first node, object identification information comprising information identifying an object. The method further comprises obtaining, from a communication context node, context information of the established communication link, where the context information is modified in dependence on topics covered during communication and activities performed during the communication. The method further comprises analyzing the obtained context information and the received object identification information to determine a relation between the context information and the object identification information, where the analyzing of the context information and the object identification information comprises retrieving, from a database, associated object information, related to the object; searching for predetermined matches between the associated object information and the object identification information, and determining the relation to exist between the context information and the object identification information upon a threshold number of matches being reached. The method further comprises activating, for the second node, the remote access related to the object based on the determined relation between the context information and the object identification information, where the activating comprises providing the remote access to the object and to a further object associated with the object.

The method provides a new form of collaboration between users, utilizing the increasing number of connected and interconnected devices and objects to provide a new type of interaction between them. Various aspects of the invention allow users to utilize a physical context in an intuitive and realistic way. The amount of actions required by users is reduced and the users do not need to remember complex handling procedures, such as searching through menus of device interfaces.

The object is according to a second aspect achieved by a collaboration node of a communication system for activating remote access. The communication system comprises a first node and a second node having an established communication link between them. The collaboration node comprises: an input device adapted to receive, from the first node, object identification information comprising information identifying an object; a processing unit adapted to: obtain, from a communication context node, context information of the established communication link, wherein the context information is modified in dependence on topics covered during communication and activities performed during the communication. The processing unit is further adapted to analyze the obtained context information and the received object identification information to determine a relation between the context information and the object identification information. The processing unit is further adapted: to retrieve, from a database, associated object information, related to the object; to search for predetermined matches between the associated object information and the context information; and to determine a relation to exist between the context information and the object identification information upon a threshold number of matches being reached. The processing unit is further adapted to activate, for the second node, the remote access related to the object based on the determined relation between the context information and the object identification information. The processing unit is adapted to provide the remote access to the object and to a further object associated with the object based on the determined relation.

The object is according to a third aspect achieved by a computer program for a collaboration node of a communication system. The communication system comprises a first node and a second node having an established communication link between them. The computer program comprises computer program code, which, when run on the collaboration node causes the collaboration node to perform the step of: receiving, from the first node, object identification information comprising information identifying an object. The collaboration node further performs the step of obtaining, from a communication context node, context information of the established communication link, wherein the context information is modified in dependence on topics covered during communication and activities performed during the communication. The collaboration node further performs the step of analyzing the obtained context information and the received object identification information to determine a relation between the context information and the object identification information. The collaboration node further performs the step of retrieving from a database, associated object information, related to the object; searching for predetermined matches between the associated object information and the context information; and determining a relation to exist between the context information and the object identification information upon a threshold number of matches being reached. The collaboration node further performs the step of activating, for the second node, the remote access related to the object based on the determined relation between the context information and the object identification information, where the activating comprises providing the remote access to the object and to a further object associated with the object.

The object is according to a fourth aspect achieved by a computer program product comprising a computer program as above, and a computer readable means on which the computer program is stored.

Further features and advantages of the invention will become clear upon reading the following description and the accompanying drawings.

### Brief description of the drawings

Figure 1 illustrates schematically an environment in which embodiments of the invention may be implemented.
Figure 2 illustrates a communication system in which embodiments of the invention may be implemented.
Figure 3 illustrates a sequence diagram of data exchange between nodes of a communication system implementing aspects of the invention.
Figure 4 illustrates a flow chart over a method in a collaboration node.
Figure 5 illustrates an exemplifying collaboration node comprising means for implementing embodiments of the invention.
Figure 6 illustrates a flow chart over a method in the first node of the communication system.
Figure 7 illustrates an exemplifying first node comprising means for implementing embodiments of the invention.
Figure 8 illustrates a particular example implementing embodiments of the invention.
Figure 9 illustrates another particular example implementing embodiments of the invention.

### Detailed description of embodiments

In the following description, for purposes of explanation and not limitation, specific details are set forth such as particular architectures, interfaces, techniques, etc. in order to provide a thorough understanding. In other instances, detailed descriptions of well-known devices, circuits, and methods are omitted so as not to obscure the description with unnecessary detail. Same reference numerals refer to same or similar elements throughout the description.

Briefly, the invention provides a way to use physical objects as enablers of remote collaboration, in particular remote access, relating to different kinds of "shared material". Based on the context of an ongoing communication session, e.g. a video communication, a meaning is assigned to a physical object (shared material), and the very same physical object can enable different types of collaboration, by providing different types of remote access, in different communication sessions in dependence on the context.

For example, a user may hold up the physical object in front of a computer screen provided with a camera or use a mobile device to capture the physical object. Characteristics of the physical objects are analyzed in relation to the context of the ongoing communication. Based on the result of the analysis, another user can be given remote access to information, services, systems and applications associated with the physical object. It is noted that the remote access(es) that is/are provided may differ for the very same object 4 depending on the communication context. For example, only a certain type of access to object 4 may be provided for a specific situation, and additional or other types of access may be provided for another situation, all in dependence on the communication context.

An aspect of the invention is the use of physical objects as entry points to services and information. The invention takes advantage of existing technology such as physical object recognition, for example, image and gesture recognition algorithms, Near Field Communication (NFC), Quick Response (QR9 codes, sensors within the objects, or a combination thereof. The invention further takes advantage of a variety of existing software for shared and remote access in order to retrieve information, troubleshoot systems, update services, and so on. Furthermore, use may be made of existing, anticipated and/or future relations between users, organizations, systems, services, and objects that, for example, could be represented as the Social Web of Things.

The invention may for example be implemented for a scenario wherein a user with an ongoing video communication uses a screen with a camera, for example, a mobile phone, a computer, or a video-call-enabled TV. The communication software may also be bundled with object/gesture recognition software and, as mentioned above, the user is already interconnected to physical objects and their information structures.

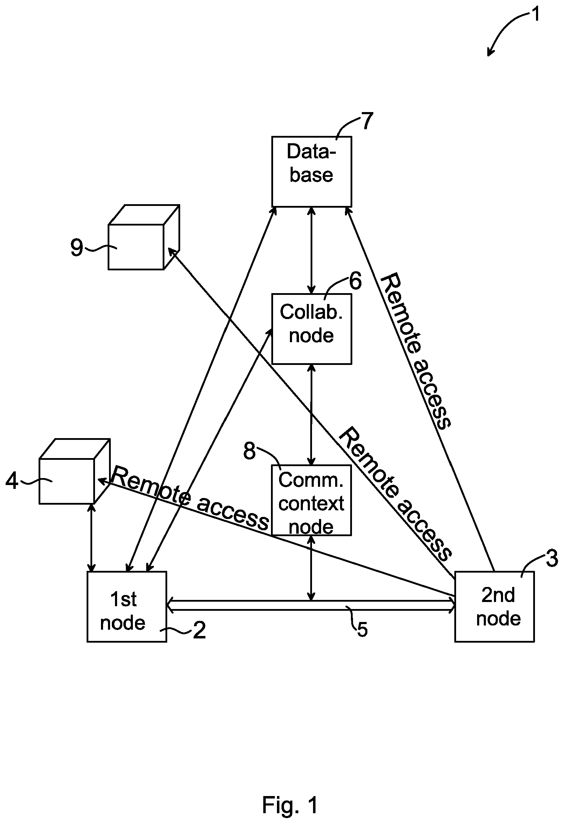

Figure 1 illustrates schematically an environment in which embodiments of the invention may be implemented. The environment may be a communication system 1 comprising a number of nodes, which will be described next.

The communication system 1 comprises a first node 2 and a second node 3, which nodes have an established communication link 5 them between, e.g. an ongoing video communication call. The first node may be a first user device used by a first user and the second node 3 may be a second user device used by a second user. The first and second nodes 2, 3 may be exemplified by a respective computer comprising or being connected to a camera. Various other examples will be given later in the description.

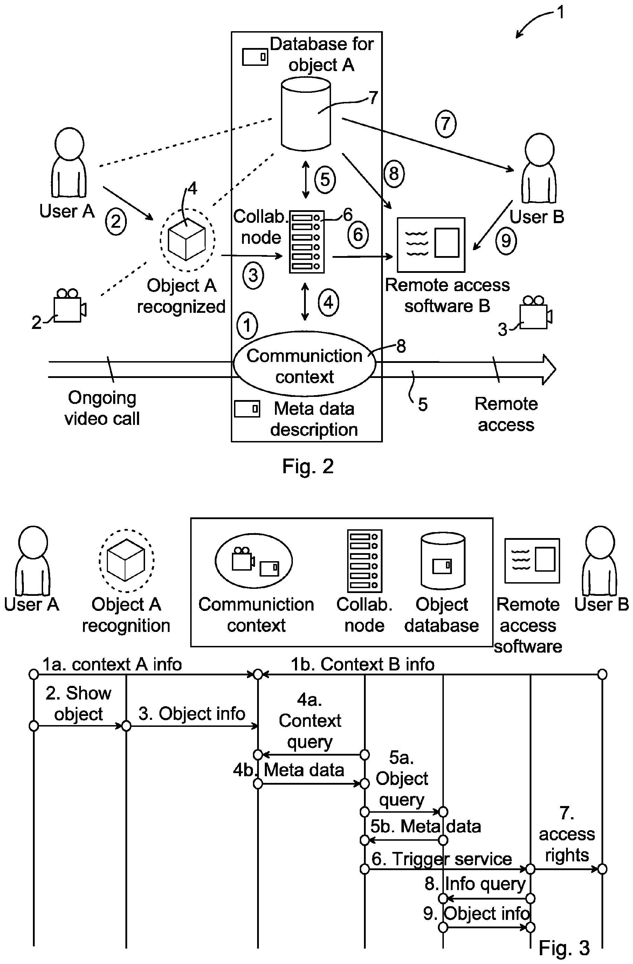

The first user (refer also to User A of figure 2), has an object 4 (refer also to Object A of figure 2) that is somehow recognized by the first node 2, e.g. by physical object recognition algorithms provided in the first node 2.

The communication system 1 further comprises a communication context node 8, e.g. a server, which is adapted to describe the communication link 5 by means of meta data. A communication context exists for the communication link. The parties involved in the communication may have some kind of relation and history, and the communication context may thus be activated immediately upon start of the communication on the communication link and modified in dependence on, e.g., topics covered in the communication and/or activities performed during the communication.

The communication system 1 further comprises a collaboration node 6 having a controlling function, which will be described in detail later. For example, the collaboration node 6 may be configured to control the providing of the second node 3 with remote access to e.g. the object 4.

The communication system 1 further comprises one or more databases associated with the object 4 and its capabilities, relations, and potential use.

The object 4 may have associated therewith one or more entities. The communication system 1 may thus comprise an associated entity 9. The associated entity 9 may comprise another object, an application, a service associated with the object 4 etc.

The second node 3 may be provided with remote access to the database 7, to the object 4 and/or to the associated entity 9. Such remote access is illustrated in the figure by arrows from the second node 3 denoted "remote access".

Figure 2 illustrates a communication system in which embodiments of the invention may be implemented.

Referring to the encircled number 1: The communication context of the established communication link 5 is continuously described by a meta channel analyzing the properties of the communication. This analysis is performed in the communication context node 8. Some examples of parameters used to classify the communication comprise topics being covered in the conversation (e.g. keywords), participants, physical locations, communication history, information from objects, etc.

Referring to the encircled number 2: User A wants to trigger a certain remote access that in some way is associated with object A, and therefore shows object A to user B by letting the first node 2 identify the object, e.g. by bringing it into a camera viewfinder (mobile phone or fixed camera).

Referring to the encircled number 3: A description of object A (and possibly the gesture together with which it was shown) is forwarded to the collaboration node 6, or a component therein.

Referring to the encircled number 4: The collaboration node 6 uses the information about the communication context, received from the communication context node 8, to try to interpret the intent user A has with showing object A. That is, the collaboration node 6 is arranged to analyze the communication context information and based thereon to try and find or deduce a purpose of user A showing object A.

Referring to the encircled number 5: The collaboration node 6 accesses the database 7 comprising information about object A in order to understand the capabilities of this object, for example, users associated with object A, services connected to object A, history of use of object A, current status of object A, and so on.

Referring to the encircled number 6: Once having figured out the meaning of showing object A, the collaboration node 6 triggers, e.g., relevant on-demand software for enabling shared or remote access of information, service, or systems associated with object A. It is noted that the triggering of remote access for the second node may be implemented in other ways.

Referring to the encircled number 7: User B is granted access to the relevant information associated with object A. In order to grant this access some kind of security measure is preferably used, for example, login authentication of the owner of the mobile phone or physical proximity to the object being shown on video.

Referring to the encircled number 8: The relevant information, services, systems, and applications associated with object A (and sometimes its connected objects) can now be utilized in the on-demand software.

Referring to the encircled number 9: User B uses the on-demand software to remotely access entities associated with or connected to object A, for example, to retrieve information, upgrade software, troubleshoot, etc.

Figure 3 illustrates a sequence diagram of data exchange between nodes of the communication system 1 as described earlier.

In particular, at arrows 1a, 1b context information about the participants (User A and User B in the example) is collected in the communication context node 8. At arrow 2, User A shows an object, which is recognized by the first node 2. At arrow 3, information about the object is forwarded to the collaboration node 6. At arrow 4a, the collaboration node 6 requests, from the communication context node 8, information about the ongoing communication between User A and User B. At arrow 4b, the collaboration node 6 receives this requested information, e.g. in the form of metadata. At arrow 5a, the collaboration node 6 makes an object query to an object database about the object, and at arrow 5b the collaboration node 6 receives this information, e.g. in the form of metadata. At arrow 6, the collaboration node 6 triggers e.g. a service for example by sending relevant on-demand software to the second node 3. The triggering of, e.g., a service is based on analysis of metadata of the context node 8 and on data of the object database 7. At arrow 7, the User B is provided access rights to specified information or the like. At arrow 8, User B, now having access rights, inquires information about object A from the object database, and at arrow 9 the User A receives this information. User B can utilize the on-demand software for remotely access e.g. the object A or objects associated or connected therewith.

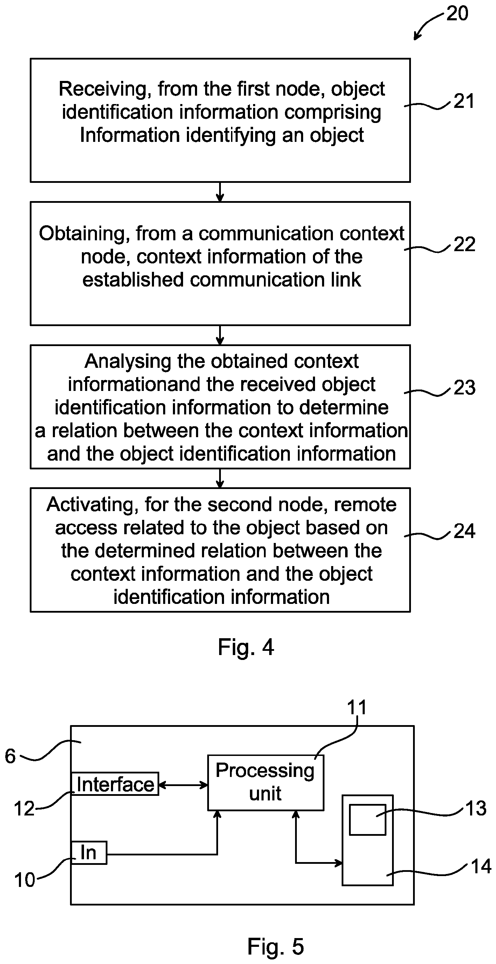

Figure 4 illustrates a flow chart over a method in a collaboration node. The method 20 is performed in and implemented for a collaboration node 6 of a communication system 1. The communication system 1 comprises a first node 2 and a second node 3, having an established communication link 5 them between, as has been described earlier.

The method 20 comprises receiving 21, from the first node 2, object identification information comprising information identifying an object 4.

The method 20 further comprises obtaining 22, from a communication context node 8, context information of the established communication link 5.

The method 20 further comprises analyzing 23 the obtained context information and the received object identification information to determine a relation between the context information and the object identification information.

The method 20 further comprises activating 24, for the second node 3, remote access related to the object 4 based on the determined relation between the context information and the object identification information.

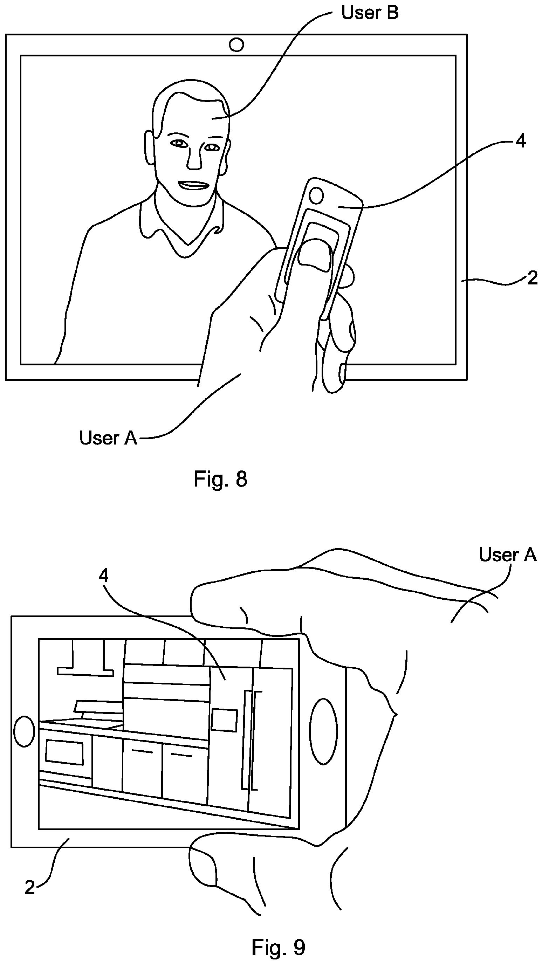

In an effort to put the above method 20 in a more concrete form, a particular example is used in the following, linking the steps of the method to an example comprising a car owner and car mechanic as first and second users using the first node 2 and the second node 3, respectively (refer also to figure 8 and related description). It is noted that this is only an example and that there are various other scenarios for which the method 20 may be implemented.

Thus, the first node 2 may comprise a first user device used by the car owner, e.g. a computer comprising or being connected to a camera. The second node 3 may be a second user device used by the car mechanic, for example also a computer comprising or being connected to a camera. The established communication link 5 may then be a video communication link.

Continuing the above example, and as an example of the receiving 21, from the first node 2, of object identification information, the computer of the car owner may receive, by means of the camera or in some other manner, information about an object 4. The camera may capture an image of the object 4, and image recognition programs may be used for identifying the object 4. Another way for the first node 2 to identify object identification information for transmission to the collaboration node 6, is to receive an electronic identification signal identifying the object 4, e.g. over a Bluetooth connection between the first node 2 and the object 4. Still another example comprises receiving data relating to a quick response code identifying the object 4, e.g. International Article Number (EAN) code. That is, the object 4 may be provided with an EAN code, and the computer may be provided with a scanner, whereby the computer may identify the object 4. It is noted that there are various additional ways for the first node 2 to obtain object identification information about the object 4, and transmit it to the collaboration node 6.

Still using the particular example, the obtaining 22 of, from a communication context node 8, context information of the established communication link 5, can be accomplished by the collaboration node 6 requesting metadata relating to the video communication link 5 from the communication context node 8.

The analyzing 23 of the obtained context information and the received object identification information to determine a relation between the context information and the object identification information may be accomplished by retrieving associated object information relating to the identified object 4 and searching for predetermined matches between the associated object information and the context information. A relation between the context information and the object identification information may thereby be determined. For example, if the identified object 4 is a car key, the collaboration node 6 may be configured to retrieve associated information such as information about the car to which the car key is associated, and/or information about the car owner (i.e. the first user, who may be holding up his car key for identification by the first computer). The collaboration node 6 may then be configured to search for matches between the associated object information and the context information. For example, if the context information comprises metadata relating to the video communication link 5, the metadata e.g. comprising an identified word then the identified word may be matched against the associated information. Particularly, the metadata may be the identified word "car", which is matched against the associated object information "car model".

The activating 24, for the second node 3, of remote access related to the object 4 based on the determined relation between the context information and the object identification information may then comprise that, when the collaboration node 6 has found the above exemplified match, it provides the car mechanic with access to the car associated with the identified object 4 (the car key). The access may be in any form, e.g. actual remote access to the car (computer system thereof), the car comprising a computer and communication means. The access may comprise access to a data base comprising information about the car and/or car key.

In an embodiment, the method 20 comprises retrieving 25, from a database 7, associated object information using the object identification information, and wherein the activating 24 for the second node 3, remote access is based on the determined relation between the context information and the object identification information and on the associated object information.

In an embodiment, the receiving 21 of object identification information comprises receiving an image of the object 4, or receiving an electronic identification signal identifying the object 4 or receiving data relating to a quick response code identifying the object 4.

In an embodiment, the obtaining 22 of context information comprises requesting and receiving metadata relating to the communication link 5. The metadata may comprise one or more of: identified words of voice signals of the communication link 5, information about the first node 2, information about the second node 3, information relating to a user of the first node 2, information relating to a user of the second node 3, information on physical location of the first node 2 and/or the second node 3. It is noted that the metadata may comprise a wide variety and type of data and a few more examples comprise physical actions and collaboration activities e.g. complementing voice information and keywords, and communication history for the nodes (used by users possibly having a communication history).

"Metadata" is sometimes explained as "data about data" or "data about data contents". Metadata may be defined as data providing information about one or more aspects of the data, such as means of creation of the data, purpose of the data or time and date of creation. In the context of the present invention, "metadata" is used for exemplifying the communication context information and may thus be seen as relating to the communication link 5, e.g. is descriptive of or for the communication link 5. Depending on characteristics of the object 4 and available metadata, only certain type(s) of functionality/access/information relevant for the particular context is/are activated.

In an embodiment, the analyzing 23 of the context information and the object identification information comprises: retrieving associated object information relating to the identified object 4, and searching for predetermined matches between the associated object information and the context information, thereby determining a relation between the context information and the object identification information.

Based on a specific communication context, e.g., the metadata, remote access may be activated only to relevant information and/or functions.

In a variation of the above embodiment, the searching of predetermined matches comprises matching metadata and/or history data of the associated object information and metadata and/or history data of the context information to predetermined combinations of metadata of the associated object information and/or history data of the associated object information and/or metadata of the context information and/or history data of the context information, and determining a relation to exist between the context information and the object identification information upon a threshold number of matches being reached.

In an embodiment, the activating 25 of the remote access related to the object 4 comprises providing remote access to the object 4 or providing remote access to a further object 9 associated with the object 4 or providing remote access to a database 7 comprising information about the object 4 or providing remote access to a database 7 comprising information about a further object 9 associated with the object 4. The remote access may also be any combination of the above examples, e.g. comprising providing remote access to the object (e.g. car key) and remote access to a further object 9 (car) associated with the object 4. It is noted here the remote access to a further object "associated with" may be a rather specific relation. That is, the object and the further object are often connected to each other in clear and tight manner, e.g. car key and car.

Figure 5 illustrates an exemplifying collaboration node comprising means for implementing embodiments of the invention. The collaboration node 6 is part of a communication system 1, as described, the communication system 1 comprising a first node 2 and a second node 3 having an established communication link 5 them between.

In particular, the collaboration node 6 comprises an input device 10 adapted to receive, from the first node 2, object identification information comprising information identifying an object 4. The object 4 may be identified (by the first node 2) in various ways, for example by means of a camera capturing images of the object 4, or a scanner enabling the reception of e.g. an EAN code of the object 4, or a Bluetooth enabled transceiver (or another short-range communication, e.g. infrared communication) receiving object identification data in a Bluetooth communication between the first node 2 and the object 4. The input device 10 is configured to receive object identification information in any form, as transmitted by the first node 2.

The collaboration node 6 may alternatively or additionally comprise an interface device 12. The interface device 12 may be used for communication with other nodes, such as the communication context node 8, the database 7, and the first node 2. The interface device 12 may thus be an interface device chosen in dependence on the communication type between the nodes. The interface device 12 may be used to receive the object identification information comprising information identifying an object 4.

The collaboration node 6 comprises a processing unit 11 adapted to: obtain, from a communication context node 8, context information of the established communication link 5; analyze the obtained context information and the received object identification information to determine a relation between the context information and the object identification information, and activate, for the second node 3, remote access related to the object 4 based on the determined relation between the context information and the object identification information.

It is noted that although the processing unit 11 is illustrated as a single unit, it may not only be a single processing unit, but could comprise two or more processing units. The processing unit 11 may for example comprise general purpose microprocessors, instruction set processors and/or related chips sets and/or special purpose microprocessors, such as ASICs (application specific integrated circuits). The processing unit 11 may also comprise board memory for caching purposes.

The processing unit 11 is operatively connected to the input device 10 and the interface device 12.

In an embodiment, the collaboration node 6 (and in particular the processing unit 11 thereof) is arranged to: retrieve, from a database 7, associated object information using the object identification information; to activate 24 for the second node 3, remote access based on the determined relation between the context information and the object identification information and on the associated object information.

Still with reference to figure 5, the invention also encompasses a computer program 13 for the collaboration node 6 of the communication system comprising a first node 2 and a second node 3 having an established communication link 5 them between. The computer program 13 comprises computer program code, which, when run on the collaboration node 6 causes the collaboration node 6 to perform the steps of: receiving, from the first node 2, object identification information comprising information identifying an object 4; obtaining, from a communication context node 8, context information of the established communication link 5; analyzing the obtained context information and the received object identification information to determine a relation between the context information and the object identification information, and activating, for the second node 3, remote access related to the object 4 based on the determined relation between the context information and the object identification information.

The computer program 13 may be carried by a computer program product 14 in the collaboration node 6, the computer program product 14 being connected to the processing unit 11. The computer program product 14 comprises a computer readable medium on which the computer program 13 is stored. For example, the computer program product 14 may be a flash memory, a RAM (Random-access memory), ROM (Read-Only memory) or an EEPROM (Electrically Erasable Programmable ROM). The computer program product 14 may for example be an optical disc, such as a CD (compact disc) or a DVD (digital versatile disc) or a Blu-Ray disc.

The invention also encompasses such computer program product 14 comprising a computer program 13 as described, and a computer readable means on which the computer program 13 is stored.

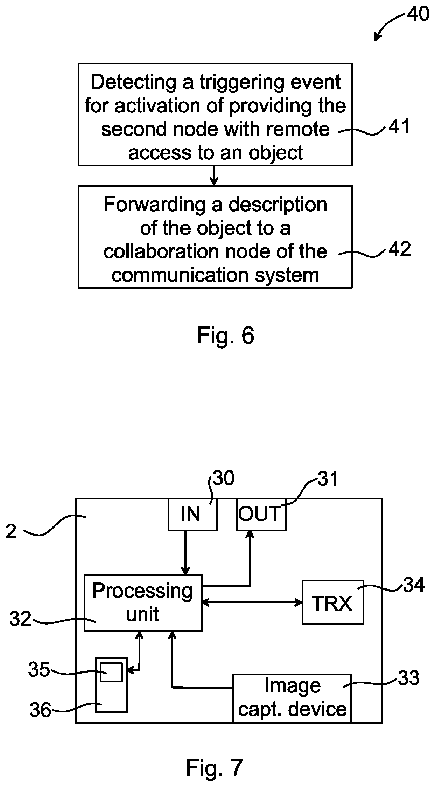

Figure 6 illustrates a flow chart over a method in the first node. As described earlier, the first node 2 may comprise a user device, such as a computer connected to an image capturing device. As another example, the first node 2 may comprise a mobile terminal communicating over a wireless communication system, e.g. adapting to Long Term Evolution (LTE) standards.

The method 40 is performed in the first node 2 of the communication system 1 as described. That is, the communication system 1 further comprises a second node 3, and the first node 2 and the second node 3 have an established communication link 5 them between. The method 40 comprises detecting 41 a triggering event for activation of providing the second node 3 with remote access to an object 4.

The method 40 comprises forwarding 42 a description of the object 4 to a collaboration node 6 of the communication system 1.

In an embodiment, the detecting 41 of the triggering event comprises: recognizing the object 4 by receiving an image of the object 4, or receiving data relating to a quick response code identifying the object 4 or receiving Bluetooth signaling comprising data identifying the object 4.

Figure 7 illustrates an exemplifying first node 2 comprising means for implementing embodiments of the invention, e.g. the methods as described. The first node 2 is provided in of a communication system 1, wherein the communication system 1 further comprises a second node 3. The first node 2 and the second node 3 have an established communication link 5 them between. As an example, the first node 2 may comprise an image capturing device operatively connected to a communication device enabling the communication link 5 (e.g. a camera operatively connected to a computer).

The first node 2 comprises a processing unit 32. It is noted that although the processing unit 11 is illustrated as a single unit, it may not only be a single processing unit, but could comprise two or more processing units. The processing unit 11 may for example comprise general purpose microprocessors, instruction set processors and/or related chips sets and/or special purpose microprocessors, such as ASICs (application specific integrated circuits). The processing unit 11 may also comprise board memory for caching purposes.

The first node 2, and in particular the processing unit 32 thereof, is adapted to detect a triggering event for activation of providing the second node 3 with remote access to an object 4, and forward a description of the object 4 to a collaboration node 6 of the communication system 1.

In an embodiment, the communication link 5 is a video communication link, and the first node 2 further comprises an image capturing device 33 operatively connected to a communication device 30, 31; 34 enabling the video communication link 5.

The described methods and devices may be implemented in many different ways. That is, the use of physical objects as enablers of remote access in e.g. a video communication may be implemented in various ways, and two scenarios for remote support are described in the following with reference to figures 8 and 9.

Figure 8 illustrates a particular example implementing embodiments of the invention. The first example relates to smart fridge troubleshooting. A user wants a support representative for a smart fridge manufacturer to have a look at the settings of his fridge, as the user believes the fridge consumes too much electricity in relation to its performance. During a mobile terminal video call with the support representative, the user swaps to a camera of the mobile terminal and films the fridge to give the representative remote access to a database of the fridge. The fact that the user has authorized the communication by using a personal mobile terminal, the physical proximity to the fridge, and/or an existing relation between the user and the fridge may be considered as sufficient security measures. Once the fridge is recognized and classified within the context of the communication, the support representative gets remote access to the fridge's database. The knowledge of the communication context in combination with the fridge having means for indicating errors (e.g. having means for registering parameters and indicating if parameters is above/below threshold values relating to possible problems), can be used to display (only) relevant information. For example, information that is interesting for the support representative may be highlighted. The support representative then uses the company's own software on a laptop to communicate with the fridge and its associated services. Being able to take control over several functions, the support representative fine-tunes the settings for power consumption in relation the user's electricity tariffs, and reboots the fridge before returning the access to the user (or before remote access rights of the support representative are terminated).

Figure 9 illustrates another particular example implementing embodiments of the invention. This example comprises a case of remote car mechanic advice. A customer has scheduled an appointment with a car mechanic to remotely check a faulty warning light indication in his car. The customer is at home in front of a video-call-enabled TV, the car is parked in the driveway outside his house, and the car mechanic is at a car repair center. When the video communication has started, the customer holds up his driver's license in front of the screen (and the video camera) enabling the car mechanic to identify the user. Once recognized and classified, the driver's license enables a creation of a trusted communication as well as triggering of a representation of information from a car mechanic customer database. Then, in order to give the car mechanic remote access to the car and enable him to check the car's computer system the user holds up the car key towards the screen. Once the car key is recognized and classified with the context of the communication (e.g. customer asking for help, car mechanic being one party of the communication, car has a problem, etc.), the car mechanic gets remote access to the car key's database as well as objects and services associated with this car key. In this case the car key has a direct logical connection to the car and both the car key and the car have an existing relation to the customer. This can be taken as verification of the rights of the mechanic to be granted remote access the car's (or car key's) information system. The car mechanic is now able to quickly find e.g. problem with firmware in the car's computer system and update it to the latest version before returning the car access to the customer (or before remote access rights of the car mechanic are terminated).

It is noted that the "remote access" should be interpreted as including various types of remote access. In the description several examples have been given, e.g. remote access the object (that comprises some type of communication means enabling the remote access), remote access to information (e.g. remote access to a data base comprising information about the object), remote access to services, remote access to systems and remote access to applications associated with the physical object. Still further examples of types of remote access comprise remote access to information, e.g. visually presented information. For example, the holding up of an object, may also trigger a presentation of certain information that is relevant for the particular context.

## Claims

1. A method (20) for activating remote access, the method (20) performed in a collaboration node (6) of a communication system (1), the communication system (1) comprising a first node (2) and a second node (3) having an established communication link (5) between them, the method (20) comprising:
- receiving (21), from the first node (2), object identification information comprising information identifying an object (4),
- obtaining (22), from a communication context node (8), context information of the established communication link (5), wherein the context information is modified in dependence on topics covered during communication and activities performed during the communication,
- analyzing (23) the obtained context information and the received object identification information to determine a relation between the context information and the object identification information, wherein the analyzing (23) of the context information and the object identification information comprises:
- retrieving, from a database (7), associated object information related to the object (4),
- searching for predetermined matches between the associated object information and the context information, and
- determining the relation to exist between the context information and the object identification information upon a threshold number of matches being reached, and
- activating (24), for the second node (3), the remote access related to the object (4) based on the determined relation between the context information and the object identification information, wherein the activating (24) comprises providing the remote access to the object (4) and to a further object (9) associated with the object (4).

2. The method (20) as claimed in claim 1, wherein retrieving comprises retrieving, from the database (7), the associated object information using the object identification information, and wherein the activating (24), for the second node (3), the remote access is based on the determined relation between the context information and the object identification information and on the associated object information.

3. The method (20) as claimed in claim 1 or 2, wherein the receiving (21) of the object identification information comprises receiving an image of the object (4), or receiving an electronic identification signal identifying the object (4), or receiving data relating to a quick response code identifying the object (4).

4. The method (20) as claimed in any of claims 1-3, wherein the obtaining (22) of the context information comprises requesting and receiving metadata relating to the communication link (5).

5. The method (20) as claimed in claim 4, wherein the metadata comprises one or more of:
identified words of voice signals of the communication link (5), information about the first node (2), information about the second node (3), information relating to a user of the first node (2), information relating to a user of the second node (3), and information on physical location of the first node (2) and/or the second node (3).

6. The method (20) as claimed in claim 1, wherein the searching for predetermined matches comprises matching metadata and/or history data of the associated object information and metadata and/or history data of the context information to predetermined combinations of metadata of the associated object information and/or history data of the associated object information and/or metadata of the context information and/or history data of the context information.

7. A collaboration node (6) of a communication system (1) for activating remote access, the communication system (1) comprising a first node (2) and a second node (3) having an established communication link (5) between them, the collaboration node (6) comprising:
- an input device (10) adapted to receive, from the first node (2), object identification information comprising information identifying an object (4), and
- a processing unit (11) adapted to:
- obtain, from a communication context node (8), context information of the established communication link (5), wherein the context information is modified in dependence on topics covered during communication and activities performed during the communication,
- analyze the obtained context information and the received object identification information to determine a relation between the context information and the object identification information, wherein to analyze the context information and the object identification information, the processing unit (11) is adapted to:
- retrieve, from a database (7), associated object information related to the object (4),
- search for predetermined matches between the associated object information and the context information, and
- determine the relation to exist between the context information and the object identification information upon a threshold number of matches being reached, and
- activate, for the second node (3), the remote access related to the object (4) based on the determined relation between the context information and the object identification information, wherein to activate the remote access related to the object (4), the processing unit (11) is adapted to provide the remote access to the object (4) and to a further object (9) associated with the object (4).

8. The collaboration node (6) as claimed in claim 7, is arranged to retrieve, from the database (7), the associated object information using the object identification information, and to activate, for the second node (3), the remote access based on the determined relation between the context information and the object identification information and on the associated object information.

9. A computer program (13) for a collaboration node (6) of a communication system (1), the communication system (1) comprising a first node (2) and a second node (3) having an established communication link (5) between them, the computer program (13) comprising computer program code, which, when run on the collaboration node (6) causes the collaboration node (6) to perform the steps of:
- receiving, from the first node (2), object identification information comprising information identifying an object (4),
- obtaining, from a communication context node (8), context information of the established communication link (5), wherein the context information is modified in dependence on topics covered during communication and activities performed during the communication,
- analyzing the obtained context information and the received object identification information to determine a relation between the context information and the object identification information, wherein to analyze the context information and the object identification information, the collaboration node (6) performs the steps of:
- retrieving, from a database (7), associated object information related to the object (4),
- searching for predetermined matches between the associated object information and the context information, and
- determining the relation to exist between the context information and the object identification information upon a threshold number of matches being reached, and
- activating, for the second node (3), the remote access related to the object (4) based on the determined relation between the context information and the object identification information, wherein the activating comprises providing the remote access to the object (4) and to a further object (9) associated with the object (4).

## Patentansprüche

1. Verfahren (20) zum Aktivieren von Fernzugriff, wobei das Verfahren (20) in einem Kooperationsknoten (6) eines Kommunikationssystems (1) durchgeführt wird, wobei das Kommunikationssystem (1) einen ersten Knoten (2) und einen zweiten Knoten (3) umfasst, die dazwischen eine eingerichtete Kommunikationsverbindung (5) aufweisen, wobei das Verfahren (20) Folgendes umfasst:
- Empfangen (21) von Objektidentifizierungsinformationen, die ein Objekt (4) identifizierende Informationen umfassen, von dem ersten Knoten (2),
- Erlangen (22) von Kontextinformationen der eingerichteten Kommunikationsverbindung (5) von einem Kommunikationskontextknoten (8), wobei die Kontextinformationen in Abhängigkeit von während der Kommunikation abgedeckten Themen und während der Kommunikation durchgeführten Aktivitäten modifiziert sind,
- Analysieren (23) der erlangten Kontextinformationen und der empfangenen Objektidentifizierungsinformationen, um eine Beziehung zwischen den Kontextinformationen und den Objektidentifizierungsinformationen zu bestimmen, wobei das Analysieren (23) der Kontextinformationen und der Objektidentifizierungsinformationen Folgendes umfasst:
- Abrufen von zugeordneten Objektinformationen bezüglich des Objekts (4) aus einer Datenbank (7),
- Suchen nach vorbestimmen Übereinstimmungen zwischen den zugeordneten Objektinformationen und den Kontextinformationen, und
- Bestimmen, dass die Beziehung zwischen den Kontextinformationen und den Objektidentifizierungsinformationen vorhanden ist, wenn eine Schwellenanzahl von Übereinstimmungen erreicht wird, und
- Aktivieren (24) des Fernzugriffs bezüglich des Objekts (4) für den zweiten Knoten (3) auf Grundlage der bestimmten Beziehung zwischen den Kontextinformationen und den Objektidentifizierungsinformationen, wobei das Aktivieren (24) Bereitstellen des Fernzugriffs auf das Objekt (4) und auf ein weiteres Objekt (9), das dem Objekt (4) zugeordnet ist, umfasst.

2. Verfahren (20) nach Anspruch 1, wobei das Abrufen ein Abrufen der zugeordneten Objektinformationen aus der Datenbank (7) unter Verwendung der Objektidentifizierungsinformationen umfasst, und wobei das Aktivieren (24) des Fernzugriffs für den zweiten Knoten (3) auf der bestimmten Beziehung zwischen den Kontextinformationen und den Objektidentifizierungsinformationen und auf den zugeordneten Objektinformationen beruht.

3. Verfahren (20) nach Anspruch 1 oder 2, wobei das Empfangen (21) der Objektidentifizierungsinformationen ein Empfangen eines Bildes des Objekts (4) oder ein Empfangen eines elektronischen Identifizierungssignals, das das Objekt (4) identifiziert, oder ein Empfangen von Daten bezüglich eines schnellen Antwortcodes, der das Objekt (4) identifiziert, umfasst.

4. Verfahren (20) nach einem der Ansprüche 1-3, wobei das Erlangen (22) der Kontextinformationen ein Anfordern und Empfangen von Metadaten bezüglich der Kommunikationsverbindung (5) umfasst.

5. Verfahren (20) nach Anspruch 4, wobei die Metadaten eines oder mehrere von Folgenden umfassen:
identifizierte Wörter von Sprachsignalen der Kommunikationsverbindung (5), Informationen über den ersten Knoten (2), Informationen über den zweiten Knoten (3), Informationen bezüglich eines Benutzers des ersten Knotens (2), Informationen bezüglich eines Benutzers des zweiten Knotens (3) und Informationen über den physischen Standort des ersten Knotens (2) und/oder des zweiten Knotens (3).

6. Verfahren (20) nach Anspruch 1, wobei das Suchen nach vorbestimmten Übereinstimmungen ein Abgleichen von Metadaten und/oder Verlaufsdaten der zugeordneten Objektinformationen und Metadaten und/oder Verlaufsdaten der Kontextinformationen mit vorbestimmten Kombinationen von Metadaten der zugeordneten Objektinformationen und/oder Verlaufsdaten der zugeordneten Objektinformationen und/oder Metadaten der Kontextinformationen und/oder Verlaufsdaten der Kontextinformationen umfasst.

7. Kooperationsknoten (6) eines Kommunikationssystems (1) zum Aktivieren von Fernzugriff, wobei das Kommunikationssystem (1) einen ersten Knoten (2) und einen zweiten Knoten (3) umfasst, die dazwischen eine eingerichtete Kommunikationsverbindung (5) aufweisen, wobei der Kooperationsknoten (6) Folgendes umfasst:
- eine Eingabevorrichtung (10), die ausgelegt ist, um Objektidentifizierungsinformationen, die ein Objekt (4) identifizierende Informationen umfassen, von dem ersten Knoten (2) zu empfangen, und
- eine Verarbeitungseinheit (11), die für Folgendes ausgelegt ist:
- Erlangen von Kontextinformationen der eingerichteten Kommunikationsverbindung (5) von einem Kommunikationskontextknoten (8), wobei die Kontextinformationen in Abhängigkeit von während der Kommunikation abgedeckten Themen und während der Kommunikation durchgeführten Aktivitäten modifiziert sind,
- Analysieren der erlangten Kontextinformationen und der empfangenen Objektidentifizierungsinformationen, um eine Beziehung zwischen den Kontextinformationen und den Objektidentifizierungsinformationen zu bestimmen, wobei die Verarbeitungseinheit (11) zum Analysieren der Kontextinformationen und der Objektidentifizierungsinformationen für Folgendes ausgelegt ist:
- Abrufen von zugeordneten Objektinformationen bezüglich des Objekts (4) aus einer Datenbank (7),
- Suchen nach vorbestimmen Übereinstimmungen zwischen den zugeordneten Objektinformationen und den Kontextinformationen, und
- Bestimmen, dass die Beziehung zwischen den Kontextinformationen und den Objektidentifizierungsinformationen vorhanden ist, wenn eine Schwellenanzahl von Übereinstimmungen erreicht wird, und
- Aktivieren des Fernzugriffs bezüglich des Objekts (4) für den zweiten Knoten (3) auf Grundlage der bestimmten Beziehung zwischen den Kontextinformationen und den Objektidentifizierungsinformationen, wobei die Verarbeitungseinheit (11) zum Aktivieren des Fernzugriff bezüglich des Objekts (4) ausgelegt ist, den Fernzugriff auf das Objekt (4) und auf ein weiteres Objekt (9), das dem Objekt (4) zugeordnet ist, bereitzustellen.

8. Kooperationsknoten (6) nach Anspruch 7, angeordnet zum Abrufen der zugeordneten Objektinformationen aus der Datenbank (7) unter Verwendung der Objektidentifizierungsinformationen und zum Aktivieren des Fernzugriffs für den zweiten Knoten (3) auf Grundlage der bestimmten Beziehung zwischen den Kontextinformationen und den Objektidentifizierungsinformationen und der zugeordneten Objektinformationen.

9. Computerprogramm (13) für einen Kooperationsknoten (6) eines Kommunikationssystems (1), wobei das Kommunikationssystem (1) einen ersten Knoten (2) und einen zweiten Knoten (3) umfasst, die dazwischen eine eingerichtete Kommunikationsverbindung (5) aufweisen, wobei das Computerprogramm (13) Computerprogrammcode umfasst, der, wenn er auf dem Kooperationsknoten (6) ausgeführt wird, den Kooperationsknoten (6) dazu veranlasst, die folgenden Schritte durchzuführen:
- Empfangen von Objektidentifizierungsinformationen, die ein Objekt (4) identifizierende Informationen umfassen, von dem ersten Knoten (2),
- Erlangen von Kontextinformationen der eingerichteten Kommunikationsverbindung (5) von einem Kommunikationskontextknoten (8), wobei die Kontextinformationen in Abhängigkeit von während der Kommunikation abgedeckten Themen und während der Kommunikation durchgeführten Aktivitäten modifiziert sind,
- Analysieren der erlangten Kontextinformationen und der empfangenen Objektidentifizierungsinformationen, um eine Beziehung zwischen den Kontextinformationen und den Objektidentifizierungsinformationen zu bestimmen, wobei der Kooperationsknoten (6) zum Analysieren der Kontextinformationen und der Objektidentifizierungsinformationen die Folgenden Schritte durchführt:
- Abrufen von zugeordneten Objektinformationen bezüglich des Objekts (4) aus einer Datenbank (7),
- Suchen nach vorbestimmen Übereinstimmungen zwischen den zugeordneten Objektinformationen und den Kontextinformationen, und
- Bestimmen, dass die Beziehung zwischen den Kontextinformationen und den Objektidentifizierungsinformationen vorhanden ist, wenn eine Schwellenanzahl von Übereinstimmungen erreicht wird, und
- Aktivieren des Fernzugriffs bezüglich des Objekts (4) für den zweiten Knoten (3) auf Grundlage der bestimmten Beziehung zwischen den Kontextinformationen und den Objektidentifizierungsinformationen, wobei das Aktivieren ein Bereitstellen des Fernzugriffs auf das Objekt (4) und auf ein weiteres Objekt (9), das dem Objekt (4) zugeordnet ist, umfasst.

## Revendications

1. Procédé (20) pour activer un accès à distance, le procédé (20) étant effectué en collaboration avec un nœud (6) d'un système de communication (1), le système de communication (1) comprenant un premier nœud (2) et un second nœud (3) ayant une liaison de communication établie (5) entre eux, le procédé (20) comprenant :
- la réception (21), à partir du premier nœud (2), d'informations d'identification d'objet comprenant des informations identifiant un objet (4),
- l'obtention (22), à partir d'un nœud de contexte de communication (8), d'informations de contexte de la liaison de communication établie (5), dans lequel les informations de contexte sont modifiées en fonction de sujets couverts durant une communication et d'activités effectuées durant la communication,
- l'analyse (23) des informations de contexte obtenues et des informations d'identification d'objet reçues pour déterminer une relation entre les informations de contexte et les informations d'identification d'objet, dans lequel l'analyse (23) des informations de contexte et des informations d'identification d'objet comprend :
- la récupération, à partir d'une base de données (7), d'informations d'objet associées liées à l'objet (4),
- la recherche de correspondances prédéterminées entre les informations d'objet associées et les informations de contexte, et
- la détermination que la relation existe entre les informations de contexte et les informations d'identification d'objet lorsqu'un nombre de seuil de correspondances est atteint, et
- l'activation (24), pour le second nœud (3), de l'accès à distance lié à l'objet (4) sur la base de la relation déterminée entre les informations de contexte et les informations d'identification d'objet, dans lequel l'activation (24) comprend la fourniture de l'accès à distance à l'objet (4) et à un autre objet (9) associé à l'objet (4).

2. Procédé (20) selon la revendication 1, dans lequel la récupération comprend la récupération, à partir de la base de données (7), des informations d'objet associées en utilisant les informations d'identification d'objet, et dans lequel l'activation (24), pour le second nœud (3), de l'accès à distance est basée sur la relation déterminée entre les informations de contexte et les informations d'identification d'objet et sur les informations d'objet associées.

3. Procédé (20) selon la revendication 1 ou 2, dans lequel la réception (21) des informations d'identification d'objet comprend la réception d'une image de l'objet (4) ou la réception d'un signal d'identification électronique identifiant l'objet (4) ou la réception de données concernant un code de réponse rapide identifiant l'objet (4).

4. Procédé (20) selon l'une quelconque des revendications 1 à 3, dans lequel l'obtention (22) des informations de contexte comprend la demande et la réception de métadonnées concernant la liaison de communication (5).

5. Procédé (20) selon la revendication 4, dans lequel les métadonnées comprennent un ou plusieurs parmi :
des mots identifiés de signaux vocaux de la liaison de communication (5), des informations sur le premier nœud (2), des informations sur le second nœud (3), des informations concernant un utilisateur du premier nœud (2), des informations concernant un utilisateur du second nœud (3) et des informations sur un emplacement physique du premier nœud (2) et/ou du second nœud (3) .

6. Procédé (20) selon la revendication 1, dans lequel la recherche de correspondances prédéterminées comprend la mise en correspondance de métadonnées et/ou de données d'historique des informations d'objet associées et de métadonnées et/ou de données d'historique des informations de contexte avec des combinaisons prédéterminées de métadonnées des informations d'objet associées et/ou de données d'historique des informations d'objet associées et/ou de métadonnées des informations de contexte et/ou de données d'historique des informations de contexte.

7. Nœud de collaboration (6) d'un système de communication (1) pour activer un accès à distance, le système de communication (1) comprenant un premier nœud (2) et un second nœud (3) ayant une liaison de communication établie (5) entre eux, le nœud de collaboration (6) comprenant :
- un dispositif d'entrée (10) adapté pour recevoir, à partir du premier nœud (2), des informations d'identification d'objet comprenant des informations identifiant un objet (4), et
- une unité de traitement (11) adaptée pour :
- obtenir, à partir d'un nœud de contexte de communication (8), des informations de contexte de la liaison de communication établie (5), dans lequel les informations de contexte sont modifiées en fonction de sujets couverts durant une communication et d'activités effectuées durant la communication,
- analyser les informations de contexte obtenues et les informations d'identification d'objet reçues pour déterminer une relation entre les informations de contexte et les informations d'identification d'objet, dans lequel, pour analyser les informations de contexte et les informations d'identification d'objet, l'unité de traitement (11) est adaptée pour :
- récupérer, à partir d'une base de données (7), des informations d'objet associées liées à l'objet (4),
- rechercher des correspondances prédéterminées entre les informations d'objet associées et les informations de contexte, et
- déterminer que la relation existe entre les informations de contexte et les informations d'identification d'objet lorsqu'un nombre de seuil de correspondances est atteint, et
- activer, pour le second nœud (3), l'accès à distance lié à l'objet (4) sur la base de la relation déterminée entre les informations de contexte et les informations d'identification d'objet, dans lequel pour activer l'accès à distance lié à l'objet (4), l'unité de traitement (11) est adaptée pour fournir l'accès à distance à l'objet (4) et à un autre objet (9) associé à l'objet (4).

8. Nœud de collaboration (6) selon la revendication 7, agencé pour récupérer, à partir de la base de données (7), les informations d'objet associées en utilisant les informations d'identification d'objet, et pour activer, pour le second nœud (3), l'accès à distance sur la base de la relation déterminée entre les informations de contexte et les informations d'identification d'objet et des informations d'objet associées.

9. Programme informatique (13) pour un nœud de collaboration (6) d'un système de communication (1), le système de communication (1) comprenant un premier nœud (2) et un second nœud (3) ayant une liaison de communication établie (5) entre eux, le programme informatique (13) comprenant un code de programme informatique qui, quand il est exécuté sur le nœud de collaboration (6) amène le nœud de collaboration (6) à effectuer les étapes suivantes :
- la réception, à partir du premier nœud (2), d'informations d'identification d'objet comprenant des informations identifiant un objet (4),
- l'obtention, à partir d'un nœud de contexte de communication (8), d'informations de contexte de la liaison de communication établie (5), dans lequel les informations de contexte sont modifiées en fonction de sujets couverts durant une communication et d'activités effectuées durant la communication,
- l'analyse des informations de contexte obtenues et des informations d'identification d'objet reçues pour déterminer une relation entre les informations de contexte et les informations d'identification d'objet, dans lequel pour analyser les informations de contexte et les informations d'identification d'objet, le nœud de collaboration (6) effectue les étapes suivantes :
- la récupération, à partir d'une base de données (7), d'informations d'objet associées liées à l'objet (4),
- la recherche de correspondances prédéterminées entre les informations d'objet associées et les informations de contexte, et
- la détermination que la relation existe entre les informations de contexte et les informations d'identification d'objet lorsqu'un nombre de seuil de correspondances est atteint, et
- l'activation, pour le second nœud (3), de l'accès à distance lié à l'objet (4) sur la base de la relation déterminée entre les informations de contexte et les informations d'identification d'objet, dans lequel l'activation comprend la fourniture de l'accès à distance à l'objet (4) et à un autre objet (9) associé à l'objet (4).
